**Europäisches Patentamt**

**European Patent Office**

**Office européen des brevets**

(19)

(11) Veröffentlichungsnummer: **0 269 828 B1**

(12) **EUROPÄISCHE PATENTSCHRIFT**

(45) Veröffentlichungstag der Patentschrift: **06.03.91**

(51) Int. Cl.[5]: **C09D 163/02, C09D 167/02**

(21) Anmeldenummer: **87115466.2**

(22) Anmeldetag: **22.10.87**

Verbunden mit 87907751.9/0327589
(europäische
Anmeldenummer/Veröffentlichungsnummer)
durch Entscheidung vom 16.11.89.

(54) **Wasserverdünnbare Überzugszusammensetzungen zur Herstellung von hitzehärtbaren Überzügen.**

(30) Priorität: **25.10.86 DE 3636368**

(43) Veröffentlichungstag der Anmeldung:
**08.06.88 Patentblatt 88/23**

(45) Bekanntmachung des Hinweises auf die
Patenterteilung:
**06.03.91 Patentblatt 91/10**

(84) Benannte Vertragsstaaten:
**AT BE CH DE ES FR GB IT LI NL SE**

(56) Entgegenhaltungen:
**EP-A- 0 077 023**
**FR-A- 2 309 596**
**FR-A- 2 377 434**
**US-A- 3 749 758**

(73) Patentinhaber: **BASF Lacke + Farben Aktiengesellschaft**
**Max-Winkelmann-Strasse 80**
**W-4400 Münster(DE)**

(72) Erfinder: **Gross, Lutz-Werner, Dr.**
**Lavesumer Strasse 78**
**W-4358 Haltern(DE)**
Erfinder: **Poth, Ulrich**
**Albachtener Strasse 97 d**
**W-4400 Münster(DE)**
Erfinder: **Hille, Dieter**
**In der Schlade 24**
**W-5060 Bergisch-Gladbach(DE)**
Erfinder: **Weidemeier, Klaus**
**Liebigweg 9 a**
**W-4400 Münster(DE)**

**Beschreibung**

Die Erfindung betrifft wasserverdünnbare Überzugszusammensetzungen zur Herstellung von hitzehärtbaren Überzügen, deren Bindemittel zumindest zum Teil aus einem epoxidharzmodifizierten, wasserverdünnbaren Polyester bestehen.

Bei der Automobilserienlackierung wird üblicherweise zunächst eine Grundierung, danach ein Füller und schließlich der Decklack aufgebracht.

In der Serienlackierung wird die Füllerschicht mit Hilfe von vorzugsweise elektrostatischen Spritzverfahren aufgetragen. Durch den Einsatz von elektrostatischen Spritzverfahren wird gegenüber anderen Spritzverfahren eine erhebliche Einsparung an Material, verbunden mit einem hohen Grad an Automatisierung, erreicht.

Für die Serienlackierung ist es außerordentlich wichtig, daß das Füllermaterial ein gutes Applikationsverhalten, d.h. gute Versprühbarkeit in vorzugsweise elektrostatischen bzw. elektrostatisch unterstützten Spritzverfahren, günstige rheologische Eigenschaften, gute Spritznebelaufnahme und günstiges Trocknungsverhalten zeigt.

Eine Aufgabe des Füllers besteht darin, Unebenheiten auszufüllen und abzudecken, um den Untergrund für den nachfolgenden Decklack zu egalisieren. Diese Abdeckung von Untergrund strukturen und Substratfehlern muß bewerkstelligt werden, ohne daß an der Füllerschicht umfangreiche Schleifarbeiten durchgeführt werden; eine Forderung, die nur erfüllt werden kann, wenn das Füllermaterial gute Verlaufseigenschaften zeigt.

Neben der optischen Qualität sind auch wichtige mechanisch-technologische Eigenschaften der Lackierung, wie z.B. Korrosionsschutz und vor allem die Resistenz gegen Steinschlag und andere mechanische Angriffe, ganz entscheidend von der Qualität der Füllerschicht abhängig.

Bisher wurden überwiegend Einbrennlacke auf Basis organischer Lösungsmittel als Füllermaterialien verwendet.

Die Lackindustrie ist aus ökonomischen und ökologischen Gründen bestrebt, die lösungsmittelhaltigen Füllermaterialien durch wasserverdünnbare Einbrennlacke zu ersetzen.

Der Erfindung liegt die Aufgabe zugrunde, wasserverdünnbare Überzugszusammensetzungen zur Herstellung von hitzehärtbaren Überzügen zu entwickeln, die die für einen Einsatz in der Automobilserienlackierung notwendigen Applikationseigenschaften zeigen und die Beschichtungen liefern, die in ihren Eigenschaften ebenso gut oder gar besser sind, als die Beschichtungen, die mit konventionellen, organische Lösungsmittel enthaltenden Füllermaterialien hergestellt worden sind.

Diese Aufgabe wird erfindungsgemäß durch wasserverdünnbare Überzugszusammensetzungen gelöst, deren Bindemittel zumindest zum Teil aus einem epoxidharzmodifizierten, wasserverdünnbaren Polyester bestehen, der hergestellt worden ist, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol, - wobei mindestens 10 Mol%, bevorzugt 30-70 Mol%, der eingesetzten Komponenten ($a_1$), ($a_2$), ($a_3$) und ($a_4$) (bezogen auf ($a_1$) + ($a_2$) + ($a_3$) + ($a_4$) = 100 Mol%) mindestens ein mindestens sechs C-Atome aufweisendes (cyclo-)aliphatisches Strukturelement enthalten - ein Polyester synthetisiert worden ist, der ein mittleres Molekulargewicht (Zahlenmittel) von unter 2000, bevorzugt 500 bis 1500, eine Säurezahl von 35 bis 240, bevorzugt 50 bis 120, eine OH-Zahl von 56 bis 320, vorzugsweise 80 bis 200, aufweist und in dem alle ($a_1$)- und ($a_3$)-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt.

Bei der Herstellung der erfindungsgemäßen Bindemittel sind die Komponenten ($a_1$), ($a_2$), ($a_3$) und ($a_4$) in Art und Menge so auszuwählen, daß mindestens 10 Mol%, bevorzugt 30 bis 70 Mol%, der eingesetzten Komponenten ($a_1$), ($a_2$), ($a_3$) und ($a_4$) (bezogen auf ($a_1$) + ($a_2$) + ($a_3$) + ($a_4$) = 100 Mol%) mindestens ein

2

EP 0 269 828 B1

mindestens sechs C-Atome aufweisendes (cyclo-)aliphatisches Strukturelement enthalten und daß nach allgemein bekannten Syntheseprinzipien aus den Komponenten $(a_1)$ und/oder $(a_2)$, $(a_3)$ und $(a_4)$ ein Polyester synthetisiert werden kann, der ein mittleres Molekulargewicht (Zahlenmittel) von unter 2000, bevorzugt 500 bis 1500, eine Säurezahl von 35 bis 240, bevorzugt 50 bis 120, eine OH-Zahl von 56 bis 320, vorzugsweise 80 bis 200, aufweist und in dem alle $(a_1)$- und $(a_3)$-Komponenten über mindestens zwei Carboxylgruppen einkondensiert sind.

Die Carboxylgruppen des Polyesters werden von den Komponenten $(a_1)$ und/oder $(a_2)$ geliefert. Der Polyester kann unter alleiniger Verwendung der Carboxylgruppenlieferanten $(a_1)$ bzw. $(a_2)$ oder unter Verwendung eines Gemisches aus den Komponenten $(a_1)$ und $(a_2)$ aufgebaut werden.

Als Komponente $(a_1)$ kann unter Berücksichtigung der obengenannten Forderungen im Prinzip jede zur Herstellung von Polyestern geeignete, mindestens drei Carboxylgruppen enthaltende Polycarbonsäure bzw. ein reaktives Derivat (z.B. Anhydrid, Ester oder Halogenid) oder ein Gemisch solcher Säuren bzw. Säurederivate eingesetzt werden. Als Beispiele seien Trimellithsäure, Trimesinsäure (1,3,5-Benzoltricarbonsäure), Pyromellithsäure und trimere Fettsäuren genannt. Bevorzugt wird Trimellithsäure eingesetzt.

Als Komponente $(a_2)$ kann unter Berücksichtigung der obengenannten Forderungen im Prinzip jedes zur Herstellung von Polyestern geeignete carboxylgruppenhaltige Polyol bzw. ein Gemisch solcher Polyole eingesetzt werden, wobei unter einem Polyol eine organische Verbindung verstanden wird, die mindestens zwei Hydroxylgruppen trägt. Vorteilhafterweise wird Dimethylolpropionsäure als $(a_2)$-Komponente eingesetzt.

Als Komponente $(a_3)$ kann unter Berücksichtigung der obengenannten Forderungen im Prinzip jede zur Herstellung von Polyestern geeignete zwei Carboxylgruppen enthaltende Polycarbonsäure bzw. ein reaktives Derivat (z.B. Anhydrid, Ester oder Halogenid) oder ein Gemisch solcher Säuren bzw. Säurederivate eingesetzt werden. Als Beispiele für geeignete Säuren seien genannt: Phthalsäure, Isophthalsäure, Terephthalsäure, Fumarsäure, Maleinsäure, Endomethylentetrahydrophthalsäure, Bernsteinsäure, Adipinsäure, Korksäure, Acelainsäure, Sebacinsäure und dimere Fettsäuren. Bevorzugt werden Phthalsäure, Isophthalsäure, Adipinsäure und dimere Fettsäuren eingesetzt.

Als Komponente $(a_4)$ kann unter Berücksichtigung der obengenannten Forderungen im Prinzip jedes zur Herstellung von Polyestern geeignete Polyol bzw. ein Gemisch von Polyolen eingesetzt werden, wobei unter Polyol eine organische Verbindung verstanden wird, die mindestens 2 Hydroxylgruppen trägt. Geeignete Polyole sind z.B. Ethylenglykol, Propandiole, Butandiole, Pentandiole, Neopentylglykol, Hexandiole, Diethylenglykol, Glycerin, Trimethylolethan, Trimethylolpropan, Pentaerythrit, Dipentaerythrit, Hydroxypivalinsäureneopentylglykolester, 2-Methyl-2-propyl-propandiol-1,3, 2,2,4-Trimethylpentandiol-1,3 und 2,2,5-Trimethylhexandiol-1,6. Bevorzugt werden Neopentylglykol, Hexandiol-1,6 und Hydroxypivalinsäureneopentylglykolester eingesetzt.

Der aus den Komponenten $(a_1)$ und/oder $(a_2)$, $(a_3)$ und $(a_4)$ hergestellte Polyester mit den obengenannten Kenndaten wird mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500 aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem erfindungsgemäßen epoxidharzmodifizierten Polyester umgesetzt, der nach Neutralisation von mindestens einem Teil der freien Carboxylgruppen in wasserverdünnbarer Form vorliegt.

Bei den Epoxidharzen auf Basis eines Bisphenols, vorzugsweise Bisphenol A, handelt es sich in der Regel um Umsetzungsprodukte von Bisphenolen mit Epichlorhydrin. Diese Epoxidharze sollen ein Epoxidäquivalentgewicht von 170 bis 1000, bevorzugt 170 bis 500, aufweisen und vorzugsweise im Durchschnitt eine bis zwei, besonders bevorzugt zwei Epoxidgruppen pro Molekül enthalten.

Es können auch mindestens eine Epoxidgruppe pro Molekül enthaltende Derivate dieser Epoxidharze eingesetzt werden. Als geeignete Derivate können mindestens eine Epoxidgruppe pro Molekül aufweisende Umsetzungsprodukte aus den obengenannten Epoxidharzen und einer (cyclo-)aliphatischen Mono-oder Polycarbonsäure, vorzugsweise einer Mono- oder Polycarbonsäure mit einem mindestens 6 C-Atome aufweisenden (cyclo-)aliphatischen Strukturelement, verwendet werden. Die Derivate können hergestellt werden, indem die in Rede stehenden Epoxidharze beispielsweise mit polymeren, vorzugsweise dimeren Fettsäuren, Adipinsäure, Azelainsäure, Dodekandicarbonsäure, langkettigen Monocarbonsäuren, Tetrahydrophthalsäure oder Hexahydrophthalsäure so umgesetzt werden, daß Umsetzungsprodukte entstehen, die noch mindestens eine Epoxidgruppe pro Molekül enthalten.

Ganz besonders bevorzugte wasserverdünnbare Überzugszusammensetzungen werden erhalten, wenn der in Stufe (A) synthetisierte Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes

3

aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-)aliphatischen Mono- oder Polycarbonsäure mit einem minde stens 18 C-Atome aufweisenden (cyclo-)aliphatischen Strukturelement, vorzugsweise einer polymeren, insbesondere einer dimeren Fettsäure, umgesetzt worden ist.

Die Umsetzung zwischen dem in der Stufe (A) synthetisierten Polyester mit dem Epoxidharz bzw. Epoxidharzderivat muß so geführt werden, daß im wesentlichen nur die Carboxylgruppen des Polyesters mit den Epoxidgruppen des Epoxidharzes umgesetzt werden und daß Konkurrenzreaktionen, wie z.B. die Umsetzung von Hydroxylgruppen mit Epoxidgruppen nur in untergeordnetem Maße ablaufen.

Geeignete Reaktionsbedingungen sind z.B.: Reaktionstemperatur 25-180 °C, vorzugsweise 80-160 °C. Die Umsetzung kann in einem innerten Lösungsmittel oder in Substanz durchgeführt werden und wird vorteilhafterweise durch basische Katalysatoren, wie z.B. tertiäre Amine, katalysiert.

Nach Neutralisation von mindestens einem Teil der in dem erfindungsgemäßen epoxidharzmodifizierten Polyester enthaltenen Carboxylgruppen mit basischen Verbindungen, wie z.B. Ammoniak, aliphatischen sekundären und tertiären Aminen, wie Diisopropanolamin, Dimethyl- und Diethylaminoethanol sowie Trimethyl-, Triethyl- und Tripropylamin, vorzugsweise tertiären Aminen, liegt der erfindungsgemäße epoxidharzmodifizierte Polyester in wasserverdünnbarer Form vor.

Zur Herstellung der erfindungsgemäßen Überzugszusammensetzungen werden die erfindungsgemäßen epoxidharzmodifizierten Polyester, Vernetzer (z.B. Aminoharze, insbesondere solche vom Typ Hexamethoxymethylmelamin, Harnstoffharze, wasserverdünnbare Epoxidharze udgl.), ggf. weitere Bindemittel, Pigmente, Füllstoffe und weitere übliche Additive zu einer wasserverdünnbaren Überzugszusammensetzung verarbeitet.

Die erfindungsgemäßen wasserverdünnbaren Überzugszusammensetzungen können neben Wasser auch in untergeordnetem Maße Lösungsmittel als Verdünnungsmittel enthalten.

Ein großer Vorteil der erfindungsgemäßen Polyester besteht in ihrer guten Verträglichkeit mit den übrigen Lackkomponenten, insbesondere mit Vernetzern und weiteren in der Überzugszusammensetzung ggf. enthaltenen Bindemitteln.

In einer vorteilhaften Ausführungsform enthalten die erfindungsgemäßen Überzugszusammensetzungen den erfindungsgemäßen Polyester als alleiniges Bindemittel; diese Ausführungsform wird dadurch ermöglicht, daß der erfindungsgemäße Polyester aufgrund seiner ausgezeichneten Pigmentbenetzungseigenschaften auch als Reibharz verwendet werden kann.

Die erfindungsgemäßen Überzugszusammensetzungen zeigen auch bei schwankenden Luftfeuchtigkeitswerten ausgezeichnete Applikationseigenschaften und sind für einen Einsatz in der Serienlackierung gut geeignet. Sie können vor allem mit elektrostatischen bzw. elektrostatisch unterstützten Spritzverfahren gut verarbeitet werden, zeigen günstige rheologische Eigenschaften, eine gute Spritznebelaufnahme, gute Verlaufseigenschaften, ein günstiges Trocknungsverhalten und ein gutes Benetzungsverhalten gegenüber PVC.

Die mit Hilfe der erfindungsgemäßen Überzugszusammensetzungen erhaltenen eingebrannten Schichten zeigen neben einer guten Korrosionsschutzwirkung eine im Vergleich zu bekannten Systemen verringerte Vergilbungsneigung und optimale Zwischenhaftungseigenschaften. Sie führen im Zusammenwirken mit der Grundierung und der bzw. den Decklackschichten zu Lackierungen mit einem sehr guten Decklackstand und einer - auch bei sehr hohen und bei sehr tiefen Temperaturen - ausgezeichneten Resistenz gegen Steinschlag und andere mechanische Angriffe.

Die Anwendungsmöglichkeiten der erfindungsgemäßen Überzugszusammensetzungen sind nicht auf Automobillackierungen beschränkt. Sie können auch zur ein- oder mehrschichtigen Beschichtung beliebiger anderer Substrate verwendet werden. Geeignete Substrate können z.B. aus Keramik, Glas, Beton, Kunststoff, vorzugsweise Metall wie Eisen, Zink, Kupfer, Aluminium, Stahl udgl. bestehen.

Mit den erfindungsgemäßen Überzugszusammensetzungen können Überzüge erhalten werden, die einen besonders hohen Glanz aufwiesen.

Außerdem liefern die erfindungsgemäßen Überzugszusammensetzungen Beschichtungen, die auf den ggf. vorbehandelten Substraten ausgezeichnet haften und sehr gute Resistenzwerte gegen mechanische Angriffe und organische Lösungsmittel zeigen.

Die Erfindung wird in den folgenden Beispielen näher erläutert. Alle Angaben über Teile und Prozentsätze sind Gewichtsangaben, falls nicht ausdrücklich etwas anderes festgestellt wird.

Darstellung eines erfindungsgemäßen epoxidharzmodifizierten, wasserverdünnbaren Polyesters (Polyester A)

442,4 g Hexandiol-1,6 und 166,6 g einer technischen polymeren Fettsäure (Dimerengehalt mindestens 80 Gew.%, Trimerengehalt höchstens 20 Gew.%, Monomerenanteil höchstens 1 Gew.%) werden in einem mittels Wärmeträgeröl beheizbaren Edelstahlreaktionskessel, der mit einem Ankerrührer, Füllkörperkolonne, Brüdenkondensator mit Vorlage, Schutzgaszuleitung (N₂) und Temperaturfühlern für die Reaktionsguttemperatur und die Brüdentemperatur am Kolonnenkopf versehen ist, eingewogen und auf 130°C aufgeheizt. Dann werden 184,3 g Isophthalsäure zugegeben und weiter aufgeheizt. Sobald sich Kondensationswasser bildet (ab etwa 160°C), wird die Reaktionsguttemperatur so langsam unter Abdestillieren des Kondensationswassers bis auf höchstens 220°C gesteigert, daß die Brüdentemperatur am Kolonnenkopf 103°C nicht über steigt. Es wird bei 220°C so lange kondensiert, bis das Reaktionsgut eine Säurezahl von 10,5 erreicht hat. Nach Abkühlen auf 140°C werden portionsweise 266,7 g Trimellithsäureanhydrid in das Reaktionsgut unter Rühren eingetragen. Danach wird auf 150°C aufgeheizt und so lange verestert, bis das Reaktionsgut eine Säurezahl von 67,7 erreicht hat. Dann wird auf 120°C abgekühlt und mit Ethylenglykolmonobutylether so verdünnt, daß eine Lösung mit 85 Gew.% Feststoffgehalt (bestimmt nach 60-minütiger Trocknung bei 130°C in einem Umlufttrockenschrank) erhalten wird. Eine mit Ethylenglykolmonobutylether auf 50 Gew.% verdünnte Probe zeigt eine Lösungsviskosität von 420 mPa•s (23°C ICI Platte-Kegel-Viskosimeter).

Die 85%ige Polyesterlösung wird auf 140°C erwärmt und mit 209,6 g eines Epoxidharzes aus Bisphenol-A und Epichlorhydrin mit einem Epoxidäquivalentgewicht von 490 portionsweise unter Rühren versetzt. Dann wird bei 140°C solange umgesetzt, bis ein Epoxidäquivalentgewicht von mehr als 50.000 und eine Säurezahl von 42,1 (bezogen auf Festkörper) erreicht worden sind. Danach wird auf 100°C abgekühlt und mit 64,6 g N,N-Dimethylethanolamin neutralisiert. Das Reaktionsgut wird dann unter Rühren in 2.000 g deionisiertes Wasser, das auf 60°C erwärmt wurde, abgelassen, und durch intensives Rühren wird eine stabile Bindemitteldispersion erzeugt, die mit 180 g deionisiertem Wasser und N,N-Dimethylethanolamin auf einen Festkörper von 35 Gew.% (bestimmt nach 60-minütiger Trocknung bei 130°C in einem Umlufttrockenschrank) und einen pH-Wert bei 23°C von 6,67 eingestellt.

Darstellung eines erfindungsgemäßen epoxidharzmodifizierten, wasserverdünnbaren Polyesters (Polyester B)

In die bei der Darstellung des Polyesters A beschriebene Apparatur, bei der die Füllkörperkolonne und der Brüdenkondensator durch einen Rückflußkühler ersetzt wurde, werden 922,5 g eines Epoxidharzes aus Bisphenol-A und Epichlorhydrin mit einem Epoxidäquivalentgewicht von 185 und 2,5 g N,N-Dimethylbenzylamin eingewogen und unter Rühren auf 100°C erhitzt. Dann werden bei 100°C portionsweise 600,0 g der zur Darstellung des Polyesters A verwendeten polymeren Fettsäure zugesetzt und auf 140°C aufgeheizt. Es wird so lange umgesetzt, bis eine Säurezahl von 1,5 und ein Epoxidäquivalentgewicht von 535 erreicht worden ist. Anschließend wird mit 380 g Diethylenglykolmonobutylether verdünnt. (Eine 50 Gew.%ige Lösung des Produktes in Diethylenglykolmonobutylether zeigt eine Lösungsviskosität von 120 mPa•s (23°C, ICI Platte-Kegel-Viskosimeter.)

Aus dem in der ersten Stufe der Darstellung des Polyesters A hergestellten Polyester werden 1.1100 g einer 90 Gew.%igen Lösung in Ethylenglykolmonobutylether hergestellt und mit 270 g der nach dem oben beschriebenen Verfahren hergestellten Epoxidharzlösung versetzt. Das Gemisch wird auf 140°C erwärmt und bei 140°C so lange umgesetzt, bis das Produkt eine Säurezahl von 40,9 (bezogen auf Festkörper) und ein Epoxidäquivalentgewicht von mehr als 50.000 aufweist. Dann wird das Reaktionsgut auf 100°C abgekühlt, mit 63,0 g N,N-Dimethylethanolamin neutralisiert und analog zur Darstellung des Polyesters A in eine wäßrige Dispersion mit einem Festkörper von 35 Gew.% und einem pH-Wert von 6,60 überführt.

Herstellung einiger erfindungsgemäßer Überzugszusammensetzungen

Gemäß den in Tabelle 1 angegebenen Gewichtsverhältnissen werden die nach den oben beschriebenen Vorschriften erhaltenen wäßrigen Polyesterdispersionen mit entionisiertem Wasser sowie N,N-Dimethylethanolamin versetzt, mit nachbehandeltem Titandioxid vom Rutiltyp angepastet und mit einem ungesättigten verzweigten Diol als Antischaummittel versetzt. Diese Mischungen werden in eine diskontinuierliche Laborsandmühle gefüllt und dispergiert, bis eine Feinheit von max. 10 μm, gemessen im Grindometer nach Hegmann, erreicht wird. Aus den Dispergiermischungen werden dann unter Zusatz weiterer Polyesterdispersion, niedrigmolekularem mit Methanol hochverethertem Melaminharz, Ethylenglykolethern, wasserverdünnbarem Acrylatharz als Verlaufsmittel und deionisierten Wasser nach allgemein bekannten Methoden die erfindungsgemäßen Überzugszusammensetzungen 1, 2, 3 und 4 erhalten (vgl. Tab. 1).

5

Applikation auf phosphatierte Stahlbleche

Die nach den oben beschriebenen Vorschriften hergestellten Überzugszusammensetzungen wurden mit deionisiertem Wasser auf eine Viskosität von 25 s, gemessen im Auslaufbecher nach DIN 4 bei 20°C, eingestellt und mit einer Fließbecherpistole (Düsenöffnung 1,2 mm; Luftdruck 4,5 bar) in zwei Kreuzgängen mit 1 Minute Zwischenablüftzeit auf phosphatierte Stahlbleche aufgespritzt. Die Applikation erfolgte bei einer Lufttemperatur von 23°C und einer relativen Luftfeuchte von 60 %. Die gespritzten Tafeln wurden 10 min bei 23°C und 10 min bei 80°C in einem Umluftofen abgelüftet und dann 20 min bei 160°C in einem Umluftofen eingebrannt, abgekühlt und beurteilt.

Die nach den oben beschriebenen Vorschriften hergestellten Überzugszusammensetzungen wurden auch elektrostatisch appliziert. Dabei wurde mit einer Esta-Behr-Anlage mit einer Glocke TOS 300/5/8, einem Abstand von 30 cm und einer Drehzahl von 30.000 Umdrehungen pro Minute bei einer relativen Luftfeuchte von 40-70 % gearbeitet.

Obwohl keine besondere Konditionierung der Spritzkabine vorgenommen wurde, wurden sowohl bei dünnen (ca. 30 μm) als auch bei dickeren Schichtdicken (ca. 54 μm) Überzüge mit hohem Glanz und sehr gutem Verlauf erhalten. Die Überzüge zeigten eine hervorragende Elastizität, gute Haftung, hohe Vergilbungsresistenz und gutes PVC-Benetzungsverhalten (vgl. Tab. 2).

Applikation der erfindungsgemäßen Überzugszusammensetzungen auf mit einer Elektrotauchgrundierung beschichtete Stahlbleche

Die erfindungsgemäßen Überzugszusammensetzungen 1 bis 4 wurden nach dem oben dargelegten Verfahren auf mit einem Elektrotauchlack gemäß Beispiel 6 der DE-OS-2701002 beschichtete phosphatierte Stahlbleche gespritzt. Die erhaltenen Überzüge zeigten einen sehr guten Verlauf, deckten die Struktur der Elektrotauchlackierung sehr gut ab und zeigten eine gute Zwischenhaftung zur Elektrotauchlackgrundierung (vgl. Tab. 3).

Applikation der erfindungsgemäßen Überzugszusammensetzungen als Füller

Die erfindungsgemäßen Überzugszusammensetzungen wurden wie oben beschrieben auf elektrotauchlackierte Stahlbleche appliziert und eingebrannt. Nach dem Abkühlen wurden die Tafeln dann zusätzlich mit einem lösungsmittelhaltigen weißen Einbrenndecklack auf Basis eines Alkydharzes mit gesättigten und ungesättigten Fettsäuren (Säurezahl 12, OH-Zahl 110) in Kombination mit einem mittelmolekularen, teilweise mit n-Butanol veretherten Melaminharz (Verhältnis 2:1), pigmentiert mit einem nachbehandelten Titandioxid vom Rutiltyp (PVK 21 %) und mit Lösungsmitteln und Additiven, die üblicherweise für die Verarbeitung eines Lackes für die Automobilserienlackierung eingesetzt werden, überspritzt und 30 min bei 130°C eingebrannt (Trockenfilmdicke 37 bis 40 μm).

Die Überzüge zeichnen sich durch guten Verlauf, gute Abdeckung der Struktur der Grundierung und gute Zwischenhaftung aus (vgl. Tab. 4).

Tabelle 1

| Überzugszusammensetzung | 1 | 2 | 3 | 4 |
|---|---|---|---|---|
| Polyester A | 20,0 | 20,0 | – | – |
| Polyester B | – | – | 20,0 | 20,0 |
| deionisiertes Wasser | 5,8 | 5,8 | 5,8 | 5,8 |
| N,N-Dimethylethanolamin | 0,1 | 0,1 | 0,1 | 0,1 |
| Titandioxid | 20,0 | 20,0 | 20,0 | 20,0 |
| Antischaummittel (50%ige Lösung in Ethylenglykolmonobutylether) | 0,3 | 0,3 | 0,3 | 0,3 |
| Dispergiermischung | 46,2 | 46,2 | 46,2 | 46,2 |
| Polyester A | 44,3 | 37,1 | – | – |
| Polyester B | – | – | 44,3 | 37,1 |
| Melaminharz (100%) | 2,6 | 5,1 | 2,6 | 5,1 |
| Diethylenglykol-monobutylether | 3,0 | 3,0 | 3,0 | 3,0 |
| Ethylenglykolmonobutylether | 2,0 | 2,0 | 2,0 | 2,0 |
| Verlaufsmittel (50%ige Lösung in Ethylenglykolmonobutylether) | 1,0 | 1,0 | 1,0 | 1,0 |
| deionisiertes Wasser | 0,9 | 5,6 | 0,9 | 5,6 |
| | 100,0 | 100,0 | 100,0 | 100,0 |

(alle Angaben in Gew.%)

EP 0 269 828 B1

Tabelle 2

| Überzugszusammensetzung | 1 | 2 | 3 | 4 |
|---|---|---|---|---|
| Schichtdicke ($\mu$m) | 41 | 45 | 45 | 45 |
| Gitterschnitt nach DIN 53151 (Gt B) | Gt 2 | Gt 1-2 | Gt 2 | Gt 2 |
| Erichsentiefung | 8,5 | 7,1 | 8,7 | 7,5 |
| Glanz (Gardner 60$^{\circ}$) | 94 | 96 | 94 | 92 |
| Härte nach Buchholz | 91 | 118 | 91 | 105 |
| Vergilbung 3h/160$^{\circ}$C | 0 | 0 | 0-1 | 0 |
| PVC-Benetzung* | | | | |
| Intercol 0787 | 1 | 1 | 1 | 1 |
| Togol | 1 | 1 | 1-2 | 1 |
| Unitecta | 1-2 | 1 | 2 | 2 |

* Notenskala 0 (sehr gut) bis 5 (sehr schlecht)

Tabelle 3

| Überzugszusammensetzung | 1 | 2 | 3 | 4 |
|---|---|---|---|---|
| Schichtdicke ($\mu$m) | 41 | 45 | 45 | 45 |
| Gitterschnitt nach DIN 53151 (Gt B) | Gt 0-1 | Gt 1 | Gt 0-1 | Gt 1 |
| Härte nach Buchholz | 91 | 105 | 100 | 105 |
| Erichsentiefung | 6,7 | 5,8 | 6,9 | 6,2 |
| Glanz (Gardner 60$^{\circ}$) | 96 | 97 | 94 | 94 |

8

Tabelle 4

| Überzugszusammensetzung | 1 | 2 | 3 | 4 |
|---|---|---|---|---|
| Schichtdicke des Füllers ($\mu$m) | 40 | 43 | 46 | 45 |
| Gitterschnitt nach DIN 53151 (Gt B) | Gt 1 | Gt 2-3 | Gt 1-2 | Gt 1-2 |
| Erichsentiefung | 6,2 | 5,8 | 6,0 | 5,8 |
| Steinschlagtest | 3 | 3-4 | 2-3 | 3 |

Der Steinschlagtest wurde mit einem VDA-Steinschlagprüfgerät (Modell 508) durchgeführt (innerhalb von 20 s einmaliger Beschuß mit 1000 g Stahlschrot; Druck 2 bar). Die Bewertungsskala reicht von 1 (sehr gut) bis 10 (sehr schlecht).

**Ansprüche**

1. Wasserverdünnbare Überzugszusammensetzungen zur Herstellung von hitzehärtbaren Überzügen, deren Bindemittel zumindest zum Teil aus einem epoxidharzmodifizierten, wasserverdünnbaren Polyester bestehen, dadurch gekenn zeichnet, daß
der epoxidharzmodifizierte, wasserverdünnbare Polyester hergestellt worden ist, indem
   (A) aus
      ($a_1$) mindestens einer mindestens drei Carboxylgruppen enthaltenden Polycarbonsäure bzw. einem reaktiven Derivat dieser Säure und/oder
      ($a_2$) mindestens einem mindestens eine Carboxylgruppe aufweisenden Polyol und
      ($a_3$) mindestens einer zwei Carboxylgruppen enthaltenden Polycarbonsäure bzw. einem reaktiven Derivat dieser Säure und
      ($a_4$) mindestens einem Polyol, - wobei mindestens 10 Mol%, bevorzugt 30-70 Mol%, der eingesetzten Komponenten ($a_1$), ($a_2$), ($a_3$) und ($a_4$) (bezogen auf ($a_1$) + ($a_2$) + ($a_3$) + ($a_4$) = 100 Mol%) mindestens ein mindestens sechs C-Atome aufweisendes (cyclo-)aliphatisches Strukturelement enthalten - ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-320, vorzugsweise 80-200, aufweist und in dem alle ($a_1$)- und ($a_3$)-Komponenten über mindestens zwei Carboxylgruppen einkondensiert sind und
      (B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt.

2. Wasserverdünnbare Überzugszusammensetzungen nach Anspruch 1, dadurch gekennzeichnet, daß ein Teil der Komponenten ($a_1$) und/oder ($a_3$) aus mindestens einer polymeren, vorzugsweise dimeren Fettsäure bestanden hat.

3. Wasserverdünnbare Überzugszusammensetzungen nach Anspruch 1 oder 2, dadurch gekennzeichnet, daß der in Stufe (A) gewonnene Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-)aliphatischen Mono- oder Polycarbonsäure, vorzugsweise einer Mono- oder Polycarbonsäure mit einem mindestens 6 C-Atome aufweisenden (cyclo-)aliphatischen Strukturelement, umgesetzt worden ist.

9

4. Wasserverdünnbare Überzugszusammensetzungen nach einem der Ansprüche 1 bis 3, dadurch gekennzeichnet, daß der in Stufe (A) gewonnene Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo)aliphatischen Mono- oder Polycarbonsäure mit einem mindestens 18 C-Atome aufweisenden (cyclo)aliphatischen Strukturelement, vorzugsweise einer polymeren, insbesondere einer dimeren Fettsäure, umgesetzt worden ist.

## Claims

1. Water-dilutable coating compositions for the production of heat-curable coatings, in which the binders are composed, at least in part, of an epoxide resin-modified, water-dilutable polyester, wherein the epoxide resin-modified, water-dilutable polyester has been prepared by

(A) synthesizing a polyester from

($a_1$) at least one polycarboxylic acid containing at least three carboxyl groups, or a reactive derivative of this acid, and/or

($a_2$) at least one polyol containing at least one carboxyl group and

($a_3$) at least one polycarboxylic acid containing two carboxyl groups, or a reactive derivative of this acid, and

($a_4$) at least one polyol, at least 10 mol%, preferably 30-70 mol%, of the components ($a_1$), ($a_2$), ($a_3$) and ($a_4$) employed containing (relative to ($a_1$) + ($a_2$) + ($a_3$) + ($a_4$) = 100 mol%) at least one (cyclo)aliphatic structural element containing at least six C atoms, the polyester having an average molecular weight (number average) less than 2,000, preferably 500 to 1,500, an acid number from 35 to 240, preferably 50 to 120, and an OH number from 56 to 320, preferably 80 to 200, and all the ($a_1$) and ($a_3$) components in the polyester being co-condensed via at least two carboxyl groups, and

(B) subsequently reacting the polyester thus obtained with 0.3 to 1.5, preferably 0.5 to 1.0, equivalents per polyester molecule of an epoxide resin having an epoxide equivalent weight of 170 to 1,000, preferably 170 to 500, and based on a bisphenol, preferably bisphenol A, and/or with a derivative of this epoxide resin containing at least one epoxide group per molecule, under reaction conditions in which essentially only carboxyl groups react with epoxide groups, to give an epoxide resin-modified polyester which, after at least part of the free carboxyl groups have been neutralized, is present in a water-dilutable form.

2. Water-dilutable coating compositions as claimed in claim 1, wherein part of the components ($a_1$) and/or ($a_3$) has been composed of at least one polymeric, preferably dimeric, fatty acid.

3. Water-dilutable coating compositions as claimed in claim 1 or 2, wherein the polyester obtained in stage (A) has been reacted with 0.3 to 1.5, preferably 0.5 to 1.0, equivalents per polyester molecule of a reaction product containing at least one epoxide group per molecule and formed from an epoxide resin based on a bisphenol, preferably bisphenol A, having an epoxide equivalent weight of 170 to 1,000, preferably 170 to 500, and from a (cyclo)aliphatic monocarboxylic or polycarboxylic acid, preferably a monocarboxylic or polycarboxylic acid having a (cyclo)aliphatic structural element containing at least 6 c atoms.

4. Water-dilutable coating compositions as claimed in one of claims 1 to 3, wherein the polyester obtained in stage (A) has been reacted with 0.3 to 1.5, preferably 0.5 to 1.0, equivalents per polyester molecule of a reaction product containing at least one epoxide group per molecule and formed from an epoxide resin based on a bisphenol, preferably bisphenol A, having an epoxide equivalent weight of 170 to 1,000, preferably 170 to 500, and from a (cyclo)aliphatic monocarboxylic or polycarboxylic acid having a (cyclo)aliphatic structural element containing at least 18 G atoms, preferably a polymeric fatty acid and particularly a dimeric fatty acid.

## Revendications

1. Compositions de revêtement diluables dans l'eau pour la fabrication de revêtements thermodurcissables, dont les liants se composent au moins en partie d'un polyester diluable dans l'eau, modifié par une résine époxydique, caractérisées par le fait que le polyester diluable dans l'eau, modifié par une résine époxydique, a été obtenu

(A) en synthétisant, à partir de :

($a_1$) au moins un acide polycarboxylique contenant au moins trois groupes carboxyle, ou un dérivé réactif de cet acide, et/ou

($a_2$) au moins un polyol présentant au moins un groupe carboxyle, et

($a_3$) au moins un acide polycarboxylique contenant deux groupes carboxyle, ou un dérivé réactif de cet acide, et

($a_4$) au moins un polyol,

- au moins 10% en moles, de préférence 30-70% en moles, des composants ($a_1$), ($a_2$), ($a_3$) et ($a_4$) employés (par rapport à ($a_1$) + ($a_2$) + ($a_3$) + ($a_4$) = 100% en moles), contenant au moins un élément structural (cyclo-)aliphatique présentant au moins six atomes de C -

un polyester qui présente une masse moléculaire moyenne (moyenne en nombre) de moins de 2 000, de préférence de 500 à 1 500, un indice d'acide de 35-240, de préférence de 50-120, un indice d'OH de 56-320, de préférence de 50-200, et dans lequel tous les composants ($a_1$) et ($a_3$) sont introduits par condensation par l'intermédiaire d'au moins deux groupes carboxyle, et

(B) en faisant réagir ensuite ce polyester ainsi obtenu avec 0,3 à 1,5, de préférence 0,5 à 1,0, équivalent par molécule de polyester d'une résine époxydique, ayant un poids équivalent en époxyde de 170 à 1000, de préférence de 170 à 500, à base d'un bisphénol, de préférence le bisphénol A, et/ou un dérivé de cette résine époxydique, contenant au moins un groupe époxyde par molécule, dans des conditions réactionnelles dans lesquelles pratiquement seuls les groupes carboxyle réagissent avec les groupes époxyde, pour obtenir un polyester modifié par une résine époxydique, lequel, après neutralisation d'au moins une partie des groupes carboxyle libres, se présente sous une forme diluable dans l'eau.

2. Compositions de revêtement diluables dans l'eau selon la revendication 1, caractérisées par le fait qu'une partie des composants ($a_1$) et/ou ($a_3$) est composée d'au moins un acide gras polymère, de préférence dimère.

3. Compositions de revêtement diluables dans l'eau selon la revendication 1 ou 2, caractérisées par le fait que le polyester obtenu à l'étape (A) a été mis à réagir avec 0,3 à 1,5, de préférence 0,5 à 1,0, équivalent par molécule de polyester d'un produit de réaction, présentant au moins un groupe époxyde par molécule, d'une résine époxydique à base d'un bisphénol, de préférence le bisphénol A, ayant un poids équivalent en époxyde de 170 à 1 000, de préférence de 170 à 500, et d'un acide mono- ou polycarboxylique (cyclo-)aliphatique, de préférence un acide mono- ou polycarboxylique ayant un élément structural (cyclo-)aliphatique présentant au moins 6 atomes de C.

4. Compositions de revêtement diluables dans l'eau selon l'une des revendications 1 à 3, caractérisées par le fait que le polyester obtenu à l'étape (A) a été mis à réagir avec 0,3 à 1,5, de préférence 0,5 à 1,0, équivalent par molécule de polyester d'un produit de réaction présentant au moins un groupe époxyde par molécule, d'une résine époxydique à base d'un bisphénol, de préférence le bisphénol A, ayant un poids équivalent en époxyde de 170 à 1 000, de préférence de 170 à 500, et d'un acide mono- ou polycarboxylique (cyclo-)aliphatique ayant un élément structural (cyclo-)aliphatique présentant au moins 18 atomes de C, de préférence un acide gras polymère, en particulier dimère.